# EUROPÄISCHE PATENTSCHRIFT

(11) **EP 2 499 722 B1**
(45) Veröffentlichungstag und Bekanntmachung des Hinweises auf die Patenterteilung: **11.12.2019**
(21) Anmeldenummer: 10767981.3
(22) Anmeldetag: 06.10.2010
(51) Int. Cl.: H02K 5/24

(54) **ELEKTRISCHE MASCHINE MIT REDUZIERTER GERÄUSCHENTWICKLUNG**
ELECTRICAL MOTOR HAVING REDUCED NOISE GENERATION
MOTEUR ÉLECTRIQUE À BRUIT RÉDUIT

(30) Priorität: 11.11.2009 DE 102009046603
(43) Veröffentlichungstag der Anmeldung: 19.09.2012
(73) Patentinhaber: Robert Bosch GmbH, 70442 Stuttgart (DE)
(72) Erfinder: WEHRLE, Andreas, 77770 Durbach (DE)
(86) Internationale Anmeldenummer: PCT/EP2010/064888
(87) Internationale Veröffentlichungsnummer: WO 2011/057867

(56) Entgegenhaltungen:
- DE-A1- 10 354 589
- DE-A1-102007 018 386
- US-A- 2 874 008
- US-A- 3 527 969

## Beschreibung

### Technisches Gebiet

Die Erfindung betrifft elektrische Maschinen insbesondere elektrische Maschinen mit einer reduzierten Geräuschentwicklung beim Betrieb.

### Stand der Technik

Elektrische Maschinen weisen in der Regel einen mit Permanentmagneten oder Statorspulen versehenen Stator und einen mit Permanentmagneten oder Läuferspulen versehenen Läufer auf. Der Stator ist in der Regel in einem Gehäuse angeordnet und mit diesem fest verbunden. Der Stator wird zur Befestigung in dem Gehäuse verklebt und/oder über geeignete Federelemente geklemmt, d.h. kraftschlüssig gehalten. Das Gehäuse umfasst weiterhin ein Lager oder eine Führung für den Läufer.

Beim Betrieb einer elektrischen Maschine, unabhängig davon ob diese als Elektromotor oder als Generator betrieben wird, wird das Gehäuse durch äußere und/oder systembedingte Einflüsse zu Schwingungen angeregt. Sind die Frequenzen der durch den Betrieb der elektrischen Maschine angeregten Schwingungen und die Eigenfrequenz des Gehäuses, bzw. die Eigenfrequenz der gesamten elektrischen Maschine identisch oder liegen nah beieinander, entsteht eine Resonanz, durch die einzelne Bauteile bzw. das Gehäuse der elektrischen Maschine stark ausgelenkt werden können. Derartige Auslenkungen verursachen akustische Geräusche, die einerseits störend sind und andererseits die Lebensdauer der elektrischen Maschine stark beeinträchtigen können.

Aus der Druckschrift DE 197 54 361 A1 ist ein Elektromotor bekannt, der einen Rückschlussring aufweist, wobei der Rückschlussring in dem Topf eines Motorgehäuses kraftschlüssig angebracht.

Aus der Druckschrift DE 103 54 589 A1 ist ein Polgehäuse für eine elektrische Maschine mit einem Gehäusegrundkörper und einem Bereich für einen magnetischen Rückschluss bekannt. Der Bereich für den magnetischen Rückschluss ist einstückig mit dem Gehäusegrundkörper ausgebildet, wobei der Bereich für den magnetischen Rückschluss durch Umformen eines Bereiches des Gehäusegrundkörpers gebildet ist. Auf diese Weise wird der Gehäusebereich für den magnetischen Rückschluss doppelwandig ausgeführt.

Das Dokument US 3 527 969 A (PAPST HERMANN) beschreibt ein Gehäuse für eine elektrische Maschine, wobei das Gehäuse einen Lagerschild aufweist, in dem ein Lager zur Lagerung einer Welle für einen Rotor der elektrischen Maschine vorgesehen ist. Das Lagerschild ist mit mehreren Blechlagen aufgebaut ist, wobei das Gehäuse einen zylinderförmigen Abschnitt aufweist, und das Lagerschild ein Ende des zylinderförmigen Abschnitts in axialer Richtung abschließt, und das Lagerschild aus einem Verbund einstückig mit dem zylinderförmigen Abschnitt hergestellt ist.

Es ist wünschenswert, eine elektrische Maschine zur Verfügung zu stellen, bei der die Geräuschentwicklung während des Betriebes deutlich reduziert ist.

### Offenbarung der Erfindung

Diese Aufgabe wird durch das Gehäuse für eine elektrische Maschine gemäß Anspruch 1 sowie durch die elektrische Maschine gemäß dem nebengeordneten Anspruch gelöst.

Weitere vorteilhafte Ausgestaltungen sind in den abhängigen Ansprüchen angegeben.

Gemäß einem ersten Aspekt ist ein Gehäuse für eine elektrische Maschine vorgesehen, wobei das Gehäuse einen Lagerschild aufweist, in dem ein Lager zur Lagerung einer Welle für einen Rotor der elektrischen Maschine vorgesehen ist, dadurch gekennzeichnet, dass das Lagerschild mit mehreren Blechlagen so aufgebaut ist, dass die Blechlagen gegeneinander mit Reibung verschiebbar sind.

Eine Idee des oben beschriebenen Gehäuses für eine elektrische Maschine besteht darin, das Lagerschild, mit dem das Gehäuse der elektrischen Maschine in axialer Richtung geschlossen wird, mehrwandig auszuführen. Das Lagerschild weist ein Lager auf, mit dem eine den Rotor der elektrischen Maschine tragende Welle gelagert ist. Durch die Rotation des Rotors der elektrischen Maschine wird über das Lager eine Rotorschwingung auf das Gehäuse der elektrischen Maschine übertragen. Durch die doppel- oder mehrwandige Ausführung des Lagerschildes der elektrischen Maschine können über den Rotor in das Lagerschild eingekoppelte Schwingungen gedämpft werden, so dass die Geräuschentwicklung des Gehäuses reduziert wird.

Weiterhin kann zwischen den Blechlagen des Lagerschildes ein viskoses Medium vorgesehen sein, mit der die Reibung zwischen den Blechlagen einstellbar ist.

Mindestens zwei der Blechlagen können gleiche Dicken oder unterschiedliche Dicken aufweisen. Insbesondere kann das Lagerschild einen Abschnitt aufweisen, der parallel zur Welle verläuft, wobei das Lager an dem Abschnitt angeordnet ist, wobei die Blechlage, an der das Lager anliegt eine geringere Dicke aufweist als eine weitere der mehreren Blechlagen. Alternativ kann das Lagerschild einen Abschnitt aufweisen, der parallel zur Welle verläuft, wobei das Lager an dem Abschnitt angeordnet ist, wobei die Blechlage, an der das Lager anliegt, eine höhere Dicke aufweist als eine weitere der mehreren Blechlagen.

Gemäß einer Ausführungsform kann das Gehäuse einen zylinderförmigen Abschnitt aufweisen, wobei das Lagerschild ein Ende des zylinderförmigen Abschnitts in axialer Richtung abschließt.

Erfindungsgemäss sind der zylinderförmige Abschnitt und das Lagerschild einstückig ausgebildet, so dass der zylinderförmige Abschnitt ebenfalls mit den mehreren Blechlagen ausgebildet ist..

Erfindungsgemäss sind der zylinderförmige Abschnitt und das Lagerschild miteinander stoffschlüssig verbunden.

Gemäß einem weiteren Aspekt ist eine elektrische Maschine mit dem obigen Gehäuse und einem Rotor, der an der Welle angeordnet ist, vorgesehen, wobei die Welle durch das Lager drehbar gehalten wird.

Weiterhin kann die Welle an zwei Lagern in zwei Lagerschilden gehalten sein, die an zwei Enden eines zylinderförmigen Abschnitts des Gehäuses angeordnet sind.

### Kurzbeschreibung der Zeichnungen

Bevorzugte Ausführungsformen werden nachfolgend anhand der beigefügten Zeichnungen näher erläutert. Es zeigen:
- Figur 1: eine Querschnittsdarstellung einer elektrischen Maschine gemäß einer Ausführungsform der Erfindung;
- Figur 2: eine Querschnittsdarstellung einer elektrischen Maschine gemäß einer weiteren Ausführungsform; und
- Figur 3a und 3b: verschiedene Ausführungsformen für den Lagenaufbau des Lagerschildes der elektrischen Maschine der Figuren 1 und 2.

### Beschreibung von Ausführungsformen

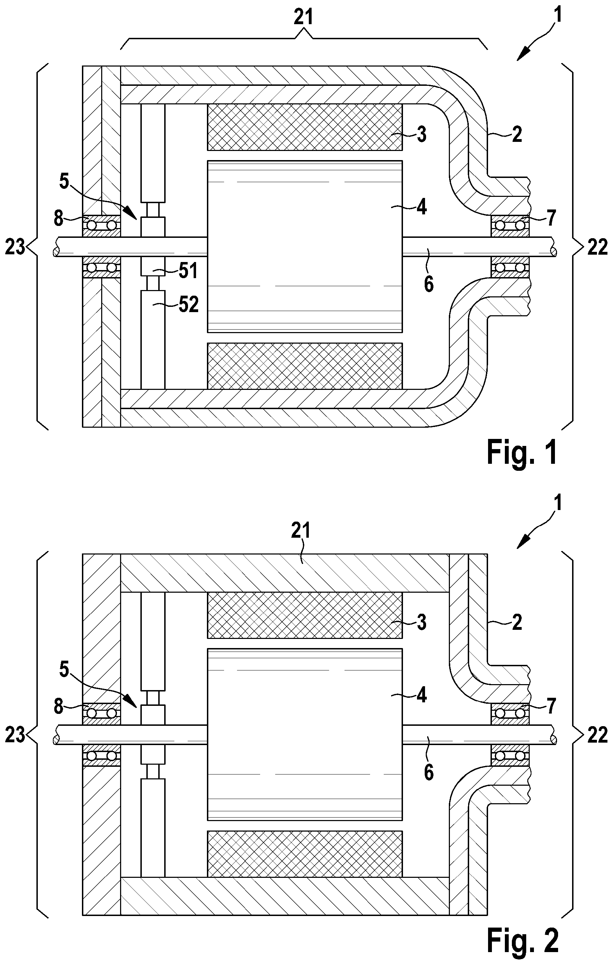

Figur 1 zeigt einen Querschnitt durch eine elektrische Maschine 1. Die elektrische Maschine 1 ist im vorliegenden Fall ein Gleichstrommotor mit einem mit Permanentmagneten 3 gebildeten Stator und einem mit elektrisch bestrombaren Rotorspulen gebildeten Rotor 4. Die Permanentmagneten 3 des Stators sind fest in einem Gehäuse 2 der elektrischen Maschine 1 befestigt. Die Befestigung des Stators 3 im Gehäuse 2 kann durch Klemmen oder Kleben oder auf sonstige Weise form- und/oder kraftschlüssig erfolgen.

Der Rotor ist an einer Rotorwelle 6 angeordnet, die an über ein erstes Lager 7 und ein zweites Lager 8 in einer Innenausnehmung des Stators 3 drehbeweglich gehalten ist. Die Lager 7, 8 ermöglichen eine Drehung des Rotors 4 abhängig von einer Bestromung der Rotorspulen. Die Rotorspulen (nicht gezeigt) des Rotors 4 können über einen Kommutator 5 mit elektrischer Energie versorgt werden.

Das Gehäuse 2 umfasst einen zylindrischen Abschnitt 21, der auf beiden Seiten durch ein sogenanntes erstes Lagerschild 22, dass das erste Lager 7 aufweist und ein zweites Lagerschild 23, das das zweite Lager 8 aufweist, abgeschlossen sein kann.

Auf einer dem ersten Lagerschild 2 gegenüberliegenden Seite des Rotors 4 ist der Kommutator 5 mit Kommutatorlamellen 51 und Bürstenelektroden 52 ausgebildet, um elektrische Energie an die (nicht gezeigt) Rotorspulen anzulegen.

Die Lager 7, 8 sind vorzugsweise als Wälzlager ausgebildet und nehmen beim Betrieb der elektrischen Maschine 1 durch die Rotation des Rotors 4 Schwingungen auf, die an das gesamte Gehäuse 2 weitergegeben werden. Durch die Schwingungen des Gehäuses 2 entsteht eine Geräuschentwicklung die als störend empfunden werden kann. Insbesondere wenn die von dem Rotor 4 auf das Gehäuse 2 übertragenen Schwingungen im Bereich einer Eigenfrequenz eines eigenständig schwingenden Abschnitts oder im Bereich einer Eigenfrequenz des gesamten Gehäuses 2 liegen, so können diese verstärkt werden und es kann zu einer Resonanzüberhöhung der auslösenden Schwingung kommen.

Zum Reduzieren der Geräuschentwicklung kann vorgesehen werden, mindestens eines der Lagerschilde 22, 23 in einem Mehrschichtaufbau auszubilden, wobei die Schichten so aufeinander liegen, dass diese durch Krafteinwirkung gegeneinander verschiebbar sind. Dies kann beispielsweise durch eine doppelwandiges Stanzblech, durch aufeinander Anordnen von mehreren Stanzblechen oder dergleichen erreicht werden.

In der Ausführungsform der Figur 1 sind der zylinderförmige Abschnitt 21 und das erste Lagerschild 22 einstückig ausgebildet und wird durch Tiefziehen eines doppelwandigen Bleches hergestellt. Zwischen den einzelnen Blechlagen kann optional eine viskose Zwischenschicht angeordnet sein, die die Blechlagen aneinander hält und ein horizontales gegeneinander Verschieben der einzelnen Lagen zulässt.

Das zweite Lagerschild 23, das das zweite Lager 8 umfasst, kann mit einer einfachen Blechlage oder ebenfalls mit mehrfachen Blechlagen ausgebildet sein, um auch über das zweite Lager 8 eingekoppelte Schwingungen zu dämpfen.

In der Ausführungsform der Figur 2 ist das Gehäuse 2 mehrstückig ausgebildet. Dabei wird das erste Lagerschild 22 im Gegensatz zu der Ausführungsform der Fig. 1 als separates Bauelement durch aufeinander Aufbringen von mehreren Blechlagen gebildet. Das erste Lagerschild ist auf formschlüssige Weise mit dem zylinderförmigen Abschnitt 21 des Gehäuses 2 verbunden.

Das erste Lagerschild 22 ist aus einem Verbund einstückig mit dem zylinderförmigen Abschnitt 21 hergestellt. Die Gehäusegeometrie wird erfindungsgemäss durch Tiefziehen der übereinanderliegenden Blechlagen in einem Vorgang hergestellt. Die erforderliche Gesamtdicke ergibt sich aus dem elektromagnetischen und den mechanischen Anforderungen, wobei wesentlich ist, dass die Blechlagen im dämpfenden Bereich nicht oder nicht vollständig formschlüssig miteinander verbunden sind.

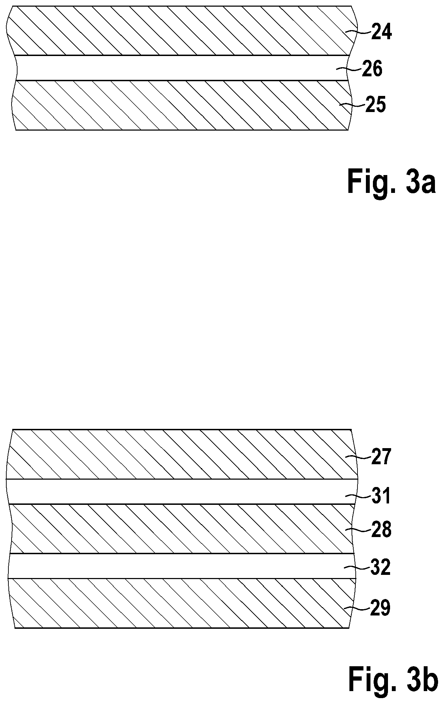

In den Figuren 3a und 3b sind verschiedene Ausführungsformen für den Aufbau des ersten Lagerschildes 22 bzw. des gesamten Poltopfbereichs des Gehäuses 2 dargestellt. In der Figur 3a weist das erste Lagerschild 22 eine erste Blechlage 24 und eine zweite Blechlage 25 auf, die aufeinander aufliegen. Die Blechlagen 24, 25 sind weitestgehend nicht formschlüssig miteinander verbunden und können so aufeinander mit Reibung gleiten. Alternativ kann eine Zwischenschicht 26 zwischen den Blechlagen 24, 25 vorgesehen sein, die ein viskoses Medium aufweist und das Gleiten der Blechlagen aneinander unterstützt.

In Figur 3b ist der Aufbau eines weiteren Lagerschildes im Querschnitt dargestellt. Das weitere Lagerschild umfasst gemäß diesem Aufbau drei Blechlagen, d.h. eine erste Blechlage 27, eine zweite Blechlage 28 und eine dritte Blechlage 29. Zwischen der ersten und der zweiten Blechlage 27, 28 kann eine erste viskose Zwischenschicht 31 und zwischen der zweiten und dritten Blechlage 28, 29 kann eine zweite viskose Zwischenschicht 32 angeordnet sein. Alternativ kann auch eine oder beide der viskosen Zwischenschichten 31, 32 weggelassen werden, so dass die entsprechenden Blechlagen 27, 28, 29 mit Reibung aufeinander gleiten.

Je nach gewünschter Dämpfung können die Dicken der einzelnen Blechlagen verschieden gewählt werden. Beispielsweise kann die Dicke der mit dem Lager 7 direkt verbundenen Blechlage größer gewählt sein, als die Dicke einer der weiteren Blechlagen. Alternativ kann die Dicke der Blechlage, die mit dem Lager 7 direkt verbunden ist, geringer sein, als die Dicke einer der weiteren, bzw. einer der weiteren Blechlagen. Auf gleiche Weise können bei mehr als zwei Blechlagen wie es in der Ausführungsform der Figur 3b dargestellt ist, die Dicken der Zwischenschichten 31, 32 verschieden ausgebildet sein.

## Patentansprüche

1. Gehäuse (2) für eine elektrische Maschine (1), wobei das Gehäuse (2) einen Lagerschild (22) aufweist, in dem ein Lager (7) zur Lagerung einer Welle (6) für einen Rotor (4) der elektrischen Maschine (1) vorgesehen ist,
wobei das Lagerschild (22) mit mehreren Blechlagen (24, 25, 27, 28, 29) so aufgebaut ist, dass die Blechlagen (24, 25, 27, 28, 29) gegeneinander mit Reibung verschiebbar sind, wobei das Gehäuse einen zylinderförmigen Abschnitt (21) aufweist, und das Lagerschild (22) ein Ende des zylinderförmigen Abschnitts (21) in axialer Richtung abschließt, und das Lagerschild 22 aus einem Verbund einstückig mit dem zylinderförmigen Abschnitt 21 hergestellt ist, wobei die Gehäusegeometrie durch Tiefziehen der übereinanderliegenden Blechlagen in einem Vorgang hergestellt ist; wobei das Lagerschild (22) einen Abschnitt aufweist, der parallel zur Welle verläuft, wobei das Lager (7) innerhalb von diesem Abschnitt angeordnet ist.

2. Gehäuse (2) nach Anspruch 1, wobei zwischen den Blechlagen (24, 25, 27, 28, 29) des Lagerschildes (22) ein viskoses Medium vorgesehen ist, mit der die Reibung zwischen den Blechlagen (24, 25, 27, 28, 29) einstellbar ist.

3. Gehäuse (2) nach Anspruch 1 oder 2, wobei die Blechlagen (24, 25, 27, 28, 29) gleiche Dicken aufweisen.

4. Gehäuse (2) nach Anspruch 1 oder 2, wobei mindestens zwei der mehreren Blechlagen (24, 25, 27, 28, 29) eine unterschiedliche Dicke aufweisen.

5. Gehäuse (2) nach Anspruch 4, wobei die Blechlage (24, 25, 27, 28, 29), an der das Lager (7) anliegt eine geringere Dicke aufweist als eine weitere der mehreren Blechlagen (24, 25, 27, 28, 29).

6. Gehäuse (2) nach Anspruch 4, wobei die Blechlage (24, 25, 27, 28, 29), an der das Lager (7) anliegt eine höhere Dicke aufweist als eine weitere der mehreren Blechlagen (24, 25, 27, 28, 29).

7. Elektrische Maschine (1) mit einem Gehäuse (2) nach einem der Ansprüche 1 bis 7 und einem Rotor (4), der an der Welle (6) angeordnet ist, wobei die Welle (6) durch das Lager (7) drehbar gehalten wird.

8. Elektrische Maschine nach Anspruch 8, wobei die Welle an zwei Lagern (7) in zwei Lagerschilden (22, 23) gehalten ist, die an zwei Enden eines zylinderförmigen Abschnitts (21) des Gehäuses (2) angeordnet sind.

## Claims

1. Housing (2) for an electric machine (1), wherein the housing (2) has a bearing plate (22), in which a bearing (7) is provided for mounting a shaft (6) for a rotor (4) of the electric machine (1),
wherein the bearing plate (22) is designed having a plurality of sheet metal layers (24, 25, 27, 28, 29) such that the sheet metal layers (24, 25, 27, 28, 29) are able to be displaced with respect to one another with friction, wherein the housing has a cylindrical section (21), and the bearing plate (22) closes off an end of the cylindrical section (21) in the axial direction, and the bearing plate (22) is produced from a composite in one piece with the cylindrical section (21), wherein the housing geometry is produced by deep drawing of the sheet metal layers lying above one another in one process; wherein the bearing plate (22) has a section that runs parallel to the shaft, wherein the bearing (7) is arranged within said section.

2. Housing (2) according to Claim 1, wherein a viscous medium is provided between the sheet metal layers (24, 25, 27, 28, 29) of the bearing plate (22), the friction between the sheet metal layers (24, 25, 27, 28, 29) being able to be set by way of said medium.

3. Housing (2) according to Claim 1 or 2, wherein the sheet metal layers (24, 25, 27, 28, 29) have identical thicknesses.

4. Housing (2) according to Claim 1 or 2, wherein at least two of the plurality of sheet metal layers (24, 25, 27, 28, 29) have a different thickness.

5. Housing (2) according to Claim 4, wherein the sheet metal layer (24, 25, 27, 28, 29) against which the bearing (7) bears has a lower thickness than another of the plurality of sheet metal layers (24, 25, 27, 28, 29).

6. Housing (2) according to Claim 4, wherein the sheet metal layer (24, 25, 27, 28, 29) against which the bearing (7) bears has a greater thickness than another of the plurality of sheet metal layers (24, 25, 27, 28, 29).

7. Electric machine (1) having a housing (2) according to one of Claims 1 to 7 and a rotor (4), which is arranged on the shaft (6), wherein the shaft (6) is held so as to be able to rotate by the bearing (7).

8. Electric machine according to Claim 8, wherein the shaft is held on two bearings (7) in two bearing plates (22, 23), which are arranged at two ends of a cylindrical section (21) of the housing (2).

## Revendications

1. Boîtier (2) pour un moteur électrique (1), dans lequel le boîtier (2) présente un flasque de palier (22), dans lequel il est prévu un palier (7) pour supporter un arbre (6) pour un rotor (4) du moteur électrique (1), dans lequel le flasque de palier (22) est constitué de plusieurs couches de tôle (24, 25, 27, 28, 29), de telle manière que les couches de tôle (24, 25, 27, 28, 29) soient déplaçables l'une par rapport à l'autre avec frottement, dans lequel le boîtier présente une partie cylindrique (21), et le flasque de palier (22) ferme une extrémité de la partie cylindrique (21) en direction axiale, et le flasque de palier (22) est fabriqué en un composite d'une seule pièce avec la partie cylindrique (21), dans lequel la géométrie du boîtier est fabriquée en une opération par emboutissage profond des couches de tôle superposées; dans lequel le flasque de palier (22) présente une partie, qui s'étend parallèlement à l'arbre, dans lequel le palier (7) est disposé à l'intérieur de cette partie.

2. Boîtier (2) selon la revendication 1, dans lequel il est prévu entre les couches de tôle (24, 25, 27, 28, 29) du flasque de palier (22) un milieu visqueux, avec lequel le frottement entre les couches de tôle (24, 25, 27, 28, 29) peut être réglé.

3. Boîtier (2) selon une revendication 1 ou 2, dans lequel les couches de tôle (24, 25, 27, 28, 29) présentent des épaisseurs égales.

4. Boîtier (2) selon une revendication 1 ou 2, dans lequel au moins deux des plusieurs couches de tôle (24, 25, 27, 28, 29) présentent une épaisseur différente.

5. Boîtier (2) selon la revendication 4, dans lequel la couche de tôle (24, 25, 27, 28, 29), sur laquelle le palier (7) repose, présente une plus faible épaisseur qu'une autre des plusieurs couches de tôle (24, 25, 27, 28, 29).

6. Boîtier (2) selon la revendication 4, dans lequel la couche de tôle (24, 25, 27, 28, 29), sur laquelle le palier (7) repose, présente une plus forte épaisseur qu'une autre des plusieurs couches de tôle (24, 25, 27, 28, 29) .

7. Moteur électrique (1) avec un boîtier (2) selon l'une quelconque des revendications 1 à 7 et un rotor (4), qui est monté sur l'arbre (6), dans lequel l'arbre (6) est supporté en rotation par le palier (7).

8. Moteur électrique selon la revendication 8, dans lequel l'arbre est maintenu sur deux paliers (7) dans deux flasques de palier (22, 23), qui sont disposés à deux extrémités d'une partie cylindrique (21) du boîtier (2) .
